# EUROPÄISCHE PATENTSCHRIFT

(11) **EP 2 562 691 B1**
(45) Veröffentlichungstag und Bekanntmachung des Hinweises auf die Patenterteilung: **24.08.2016**
(21) Anmeldenummer: 12181703.5
(22) Anmeldetag: 24.08.2012
(51) Int. Cl.: G06K 19/07, G06K 19/077, H01Q 1/22, H01Q 7/00, H01Q 9/24, H01Q 9/28

(54) **Transponder-Baueinheit**
Transponder unit
Dispositif transpondeur

(30) Priorität: 25.08.2011 DE 202011104822 U
(43) Veröffentlichungstag der Anmeldung: 27.02.2013
(73) Patentinhaber: KaWe Engineering GmbH, 33154 Salzkotten (DE)
(72) Erfinder: Wendisch, Jan, 33154 Salzkotten (DE)
(74) Vertreter: Albrecht, Ralf

(56) Entgegenhaltungen:
- WO-A1-2007/042021
- DE-A1- 19 510 458
- DE-A1-102008 063 909
- GB-A- 2 467 185

## Beschreibung

Die Erfindung betrifft eine Transponder-Bauheinheit nach dem Oberbegriff des Patentanspruches 1.

Ferner betrifft die Erfindung einen Körper, der mit einer Transponder-Baueinheit versehen ist.

Aus der US 2007/0095926 A1 bzw. DE 11 2008 000 065 T5 ist eine Transponder-Baueinheit mit einem Transponder bekannt, auf dessen Substrat zum einen ein IC-Baustein mit einem Datenspeicher und eine elektrisch mit demselben verbundene Primärantenne und zum anderen eine Sekundärantenne aufgebracht sind. Die elektromagnetische Kopplung zwischen der Primärantenne und der Sekundärantenne ermöglicht den Einsatz der Transponder-Baueinheit in einem Hochfrequenzbereich.

Ferner ist aus der DE 20 2010 011 285 U1 eine Transponder-Baueinheit mit einem Transponder bekannt, wobei zum Einsatz desselben im Hochfrequenzbereich eine Primärantenne mit einem IC-Baustein elektrisch verbunden ist einerseits und wobei die Primärantenne mit einer Sekundärantenne elektromagnetisch gekoppelt ist andererseits. Die Sekundärantenne ist zylinderförmig ausgebildet. Innerhalb der Sekundärantenne ist die Primärantenne zusammen mit dem IC-Baustein angeordnet.

Aus der DE 195 10 458 A1 ist ein stiftförmiger Transponder bekannt, der in ein Sackloch einsetzbar ist. Eine Befestigung des Transponders an einer Innenseite einer Mantelhülse ist nicht offenbart.

Die WO 2007/042021 A1 offenbart eine Transponder-Baueinheit mit einem Transponder enthaltend einen Datenspeicher, eine Primärantenne sowie eine Sekundärantenne, wobei die Antennen in einem Winkel zueinander angeordnet sind. Der Transponder ist außenseitig auf einem Transponderträger aufgebracht, der in eine Sacklochbohrung einer zu identifizierenden Palette einsetzbar ist.
Aus der DE 10 2008 063 909 A1 ist eine Transponder-Baueinheit mit einem Transponder enthaltend einen Datenspeicher, eine Primärantenne sowie eine Sekundärantenne bekannt, die zur Identifizierung von Papierrollen eingesetzt wird. Hierzu wird der Transponder außen oder innen an einer Hülse der Papierrolle befestigt.

Aus der GB 2 467 185 A eine Transponder-Baueinheit mit einem Transponder enthaltend einen IC-Baustein, eine Pri märantenne sowie eine Sekundärantenne offenbart. Die Transponder-Baueinheit dient zur Kennzeichnung eines als Kabel ausgebildeten Körpers. Der Transponder wird auf einer Außenseite einer Mantelhülse aufgebracht, die das Kabel in einem Abstand umgibt. Zum Schutz des Transponders ist diese außenseitig von einem Gehäuse umgeben. Nachteilig an der bekannten Transpondereinheit ist die aufwendige Befestigung.

Aufgabe der vorliegenden Erfindung ist es, eine Transpondern-Baueinheit mit einem Transponder derart weiterzubilden, dass die Anbringung des Transponders an einen Körper, insbesondere eine nachträgliche Anbringung des Transponders an den Körper auf einfache und kostengünstige Weise bereit gestellt wird.

Zur Lösung der Aufgabe weist die Erfindung die Merkmale des Patentanspruches 1 auf.

Der besondere Vorteil der Erfindung besteht darin, dass eine Transponder-Baueinheit in einer einfachen geometrischen Form bereitgestellt werden kann, die ohne Beschädigung des Transponder in einer Öffnung bzw. ein Sackloch eines Körpers einsetzbar ist. Eine erfindungsgemäße Mantelhülse, in der Transponder gebogen bzw. aufgerollt angeordnet ist, kann auf einfache Weise formschlüssig und/oder kraftschlüssig und/oder stoffschlüssig in eine Öffnung eines mittels des Transponder zu identifizierenden Körpers eingesetzt werden. Der Transponder kann auf herkömmliche Weise hergestellt sein auf einem flexiblen Substrat, das nach Verbringen in eine Rohr- oder Hohlzylinderform in die Mantelhülse einsteckbar ist.

Nach der Erfindung stützt sich das Substrat bzw. der Transponder in einer Montagestellung der Transponder-Baueinheit mit einer ersten Flachseite an einer Innenfläche des hohlzylinderförmigen Mantelelementes ab. Vorteilhaft kann hierdurch eine lagesichere Halterung des Transponders innerhalb des Mantelelementes bewirkt werden, ohne dass das Mantelelement stirnseitig verschlossen sein muss. Nach einer bevorzugten Ausführungsform der Erfindung ist eine Quererstreckung der Mantelhülse auf eine Breite des Transponders bzw. Substrats derart abgestimmt, dass mindestens 80 % der ersten Flachseite des Transponders an der Innenfläche der Mantelhülse zur Anlage kommt. Gegenüberliegende Ränder des Transponders bzw. des Substrat können unmittelbar aneinanderliegen. Alternativ können sich gegenüberliegende Ränder des Transponders bzw. des Substrat auch überlappen oder es kann ein Zwischenraum zwischen den gegenüberliegenden Rändern vorgesehen sein. Wesentlich ist, dass das Substrat bzw. der Transponder nicht zu mehreren Windungen gebogen ist, sondern lediglich im Bereich einer einzigen Windung, um die Funktionsfähigkeit des Transponders zu garantieren.

Nach einer Weiterbildung der Erfindung ist der Transponder auf einem zylinderförmigen Kernstab aufgerollt bzw. umgibt diesen vollständig bzw. unter Bildung einer Überlappung, so dass unter Vermeidung einer Knickung des Substrats der Transponder in einem ersten Schritt auf den Kernstab aufgerollt und dann zusammen mit diesen in die Mantelhülse einsteckbar ist. Vorteilhaft kann hierdurch die Montage des Transponders erleichtert werden.

Nach einer Weiterbildung der Erfindung ist die Mantelhülse und/oder der Kernstab aus eine elektrisch nicht leitenden und vorzugsweise festen Material, so dass die elektrische Funktionsfähigkeit des Transponders nicht beeinträchtigt wird. Ggf. können die Mantelhülse und/oder der Kernstab auch flexibel ausgebildet sein.

Zur Lösung der Aufgabe weist die Erfindung gemäß Anspruch 8 einen Körper auf, der dadurch gekennzeichnet ist, dass der Körper ein Sackloch aufweist, in dem eine Transponder-Baueinheit nach einem der Ansprüche 1 bis 7 formschlüssig und/oder kraftschlüssig und/oder stoffschlüssig gehaltert ist.

Der besondere Vorteil des Körpers besteht darin, dass zur Befestigung der Transponder-Baueinheit an dem Körper derselbe lediglich mit einem Sackloch versehen sein muss, in den die Transponder-Baueinheit formschlüssig und/oder kraftschlüssig und/oder stoffschlüssig gehaltert ist. Vorteilhaft kann ein solches Sackloch auch nachträglich an dem Körper durch Bohren erzeugt werden. Die Transponder-Baueinheit kann hierdurch in einem geschützten Bereich des Körpers positioniert sein. Nach Montage der Transponder-Baueinheit in dem Sackloch kann das Sackloch mit einem Stopfen verschlossen sein. Ggf. kann durch Öffnen des Sacklochs die Transponder-Baueinheit wieder entfernt werden.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: Eine schematische Perspektivdarstellung einer Transponder-Baueinheit,
- Figur 2a: eine Draufsicht auf einen Transponder in einem Ausgangszustand,
- Figur 2b: eine Perspektivdarstellung eines Kernstabes, der mit dem Transponder umwickelbar ist,
- Figur 2c: eine Perspektivdarstellung einer Mantelhülse, in die der Transponder zusammen mit dem Kernstab einsetzbar ist,
- Figur 3: eine Draufsicht auf einen Transponder nach einer weiteren Ausführungsform,
- Figur 4: eine Draufsicht auf einen Transponder nach einer weiteren Ausführungsform.

Eine Transponder-Baueinheit 1 weist eine zylinderförmige Formgebung auf und ist auf einfache Weise in ein nicht dargestelltes Sackloch eines Körpers einsetzbar. Bei dem Körper kann es sich um Produktgegenstände beispielsweise aus einem Kunststoffmaterial handeln, die zur Identifizierung derselben jeweils mit einem Transponder 2 der Transponder-Baueinheit 1 zu verbinden ist. Das Sackloch ist hohlzylinderförmig ausgebildet und kann beispielsweise durch Bohren an dem fertigen Produkt hergestellt worden sein. Das Sackloch weist eine solche Dicke und/oder Länge bzw. Durchmesser auf, dass die Transponder-Baueinheit mit Spiel oder rastend in das Sackloch einschiebbar ist. Wenn die Transponder-Baueinheit 1 mit Spiel in das Sackloch eingeschoben wird, ist vorzugsweise ein Stopfen vorgesehen, mittels dessen die Öffnung des Sacklochs verschließbar ist. Sofern die Transponder-Baueinheit 1 von dem Körper wieder entnommen werden soll, bracht lediglich der Stopfen entfernt werden. Alternativ kann die Transponder-Baueinheit 1 auch durch Klebung oder durch Umspritzen in dem Körper gehaltert sein. Ein Entfernen der Transponder-Baueinheit 1 von dem Körper ist dann nicht mehr möglich.

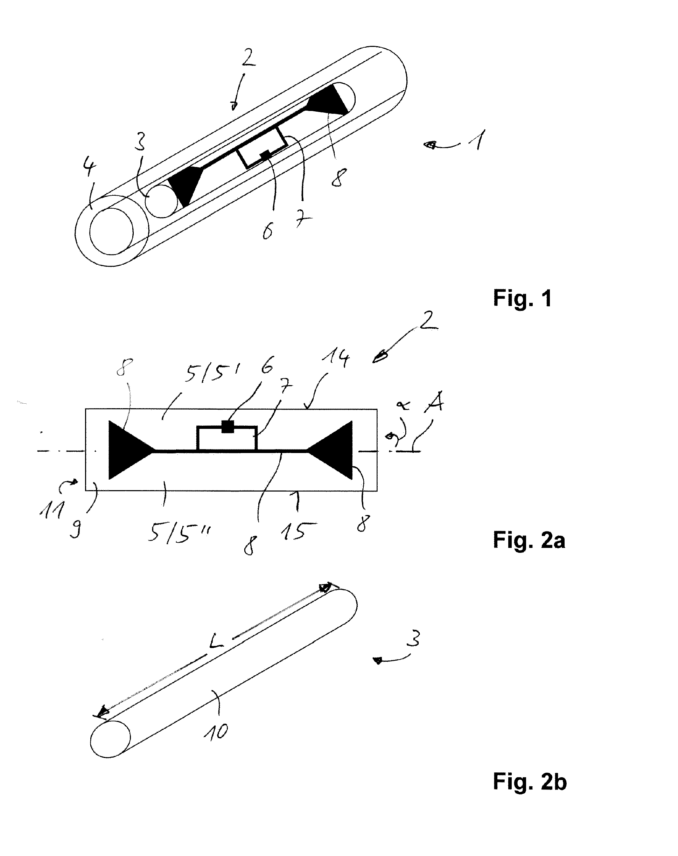

Die Transponder-Baueinheit 1 besteht im Wesentlichen aus dem Transponder 2, einem Kernstab 3 sowie einem Mantelelement, das in dem Ausführungsbeispiel gemäß den Figuren 1 bis 4 als eine Mantelhülse 4 ausgebildet ist.

Der Transponder 2 weist ein flexibles Substrat 5 auf, auf dem ein mit einem Datenspeicher versehener IC-Baustein 6 (Chip) elektrisch verbunden ist mit einer Primärantenne 7 einerseits und auf dem eine elektromagnetisch mit der Primärantenne 7 gekoppelte Sekundärantenne 8 anderseits aufgebracht ist. Die Sekundärantenne 8 erstreckt sich über eine größere Fläche als die Primärantenne 7 und ist auf die Resonanzfrequenz des aus dem IC-Bausteins 6 und der Primärantenne 7 gebildeten Resonanzkreises abgestimmt.

Der IC-Baustein 6, die Primärantenne 7 und die Sekundärantenne 8 sind auf einer ersten Flachseite 9 des Substrats 5 beispielsweise durch Aufdrucken aufgebracht.

Die Sekundärantenne 8 dient als Koppelantenne, die eine Kommunikation des Transponder 2 in einem UHF-Bereich (860-915 MHz oder im Mikrowellenbereich 2,6 GHz) ermöglicht. Die Kommunikation wird mit einem elektromagnetischem Lesegerät ermöglicht.

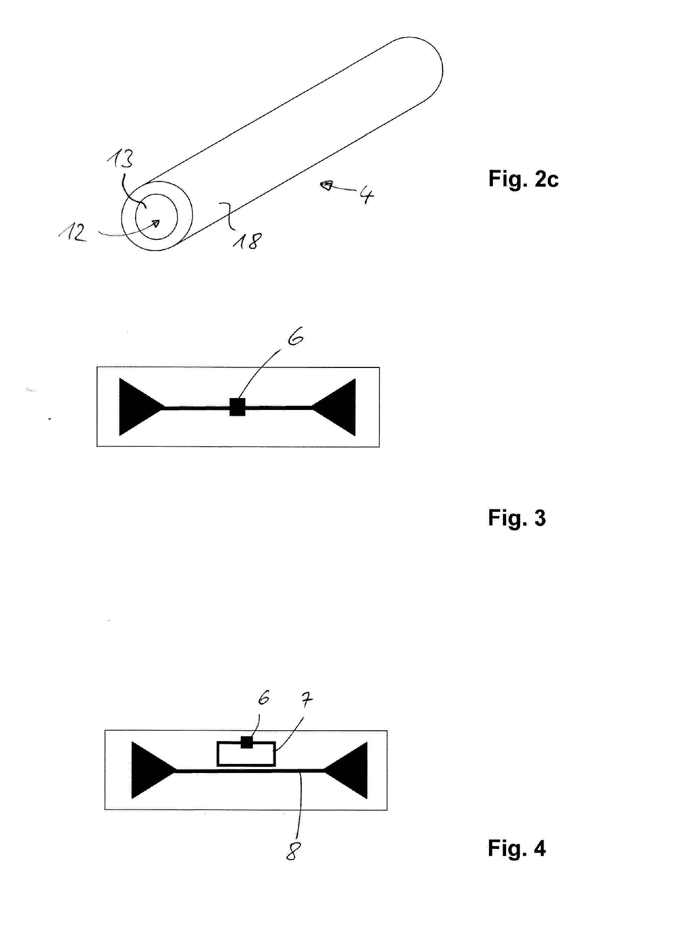

In einem Ausgangszustand gemäß Figur 2a weist der Transponder 2 eine planare Form auf. In einem ersten Montageschritt wird dann das Substrat 5 mit einem Bereich, in dem sich eine Längsachse A des Substrats 5 erstreckt, an eine Umfangsfläche 10 des vorzugsweise massiven Kernstabs 3 angelegt. Vorzugsweise weist das Substrat 5 eine gleiche Länge L auf, wie der Kernstab 3. Nachfolgend werden die sich zu beiden Seiten der Längsache A gegenüberliegende Substratabschnitte 5', 5" um den Winkel ά solange gebogen, bis eine zu der erste Flachseite 9 erstreckende zweiten Flachseite 11 des Substrat 5 vollständig auf der Umfangsfläche 10 des Kernstabs 3 zur Anlage kommt. Ggf. kann diese gerollte bzw. gebogene Montageposition des Transponder 2 durch eine Haftklebung aufrecht erhalten werden, bevor der Kernstab 3 zusammen mit dem gebogenen Transponder 2 in eine Stirnöffnung 12 der hohlzylinderförmigen Mantelhülse 4 eingeschoben wird. In der Montageposition liegt die erste Flachseite 9 des Transponders 2 im Wesentlichen flächig und unmittelbar an einer Innenfläche 13 der Mantelhülse 4 an.

Nach einer alternativen Ausführungsform der Erfindung kann der gebogenen Transponder 2 auch ohne Haftung an dem Kernstab 3 in die Mantelhülse 4 eingesetzt werden, wobei sich die erste Flachseite 9 desselben unter Bildung einer Biegespannung an der Innenfläche 13 der Mantelhülse 4 abstützt.

Nach einer alternativen Ausführungsform kann der Transponder 2 in der gerollten bzw. gebogenen Form auch ohne den Kernstab 3 in die Ausnehmung der Mantelhülse 4 eingesetzt werden, sofern keine Führung erforderlich ist.

Im vorliegenden Ausführungsbeispiel weist der Kernstab 3 einen solchen Außendurchmesser bzw. und die Mantelhülse 4 einen solchen Innendurchmesser auf, dass Ränder 14, 15 der Substratabschnitte 5' bzw. 5" unter Bildung eines ringausschnittförmigen Abstandes in der bogenförmigen Montageposition angeordnet sind.

Nach einer alternativen Ausführungsform können die Ränder 14, 15 des Substratsabschnittes 5' bzw. 5" auch unmittelbar aneinanderstoßen oder sich überlappen.

Der Transponder 2 bzw. das Substrat 5 erstreckt sich somit im Wesentlichen in einem Winkelbereich von 360°. Ein Mindestanteil von 80 % der ersten Flachseite 9 des Transponders 2 ist an der Innenfläche 13 der Mantelhülse 4 anliegend angeordnet bzw. derselben zugeordnet. Der Radius des gebogenen Transponders 2 wird durch den Radius des Kernstabs 3 und/oder durch den Innenradius der Mantelhülse 4 vorgegebenen und weicht von diesem nicht wesentlich ab. Die Biegung des Transponders 2 erfolgt um eine Achse, die sowohl in der Erstreckungsebene des Transponders 2 und in einer Längsrichtung des rechteckförmig ausgebildeten Transponders 2 verläuft.

Der Transponder 2 ist vorzugsweise flexibel ausgebildet. Der Kernstab 3 und die Mantelhülse 4 sind aus einem nicht elektrisch leitenden Material ausgebildet, vorzugsweise aus einem Kunststoff und/oder Pappmaterial. Der Kernstab 3 und die Mantelhülse 4 können starr oder flexibel ausgebildet sein.

Die Mantelhülse 4 muss nicht im Querschnitt kreisförmig sein. Diese kann auch vieleckig oder viereckig ausgebildet sein. Es ist nicht wesentlich, dass der Transponder 2 mit seiner ersten Flachseite 9 unmittelbar an der Innenfläche 13 der Mantelhülse 4 anliegt. Es reicht aus, wenn die rohrförmige Formgebung des Transponders 2 durch die Geometrie der Mantelhülse 4 aufrechterhalten wird.

Während die Primärantenne 7 des Transponder 2 unmittelbar mit der Sekundärantenne 8 verbunden sein kann, kann nach einer alternativen Ausführungsform der Erfindung gemäß Figur 3 die Primärantenne 7 in dem IC-Baustein 6 integriert sein. Nach einer weiteren Ausführungsform der Erfindung gemäß Figur 4 kann die Primärantenne 7 auch nicht elektrisch mit der Sekundärantenne 8 verbunden sein, sondern lediglich elektromagnetisch mit der Sekundärantenne 8 gekoppelt sein.

Nach einer nicht dargestellten alternativen Ausführungsform der Erfindung kann der Transponder 2 auch an einer Außenfläche 18 der Mantelhülse 5 befestigt sein. Beispielsweise kann der Transponder 2 auf der Außenfläche 18 durch Anspritzen bzw. Umspritzen aufgebracht sein, wobei der Transponder 2 auf der Außenfläche 18 umspritzt angeordnet ist. Die so gebildete Transponder-Baueinheit ist außenseitig mit dem Umspritzmaterial versehen, so dass der Transponder 2 geschützt angeordnet ist. Das Aufbringen des Transponders 2 auf die Außenfläche 18 erfolgt vorzugsweise stoffschlüssig, insbesondere durch Kleben.

Die Mantelhülse 4 kann hohlförmig oder mit einem stabilisierenden Material gefüllt sein.

Alternativ kann der Transponder 2 auch um den massiven Kernstab 3 umgelegt sein bzw. stoffschlüssig befestigt sein.

## Patentansprüche

1. Transponder-Bauheinheit zur Anbringung an einem Körper, insbesondere an einem Produktgegenstand, mit einem Transponder (1) enthaltend ein flexibles Substrat (5, 5', 5"), auf dem ein einen Datenspeicher aufweisender IC-Baustein (6) und eine elektrisch mit dem IC-Baustein (6) verbundene Primärantenne (7) sowie eine Sekundärantenne (8) aufgebracht sind, und mit einem Mantelelement (4), das als eine hohlförmige Mantelhülse ausgebildet ist, **dadurch gekennzeichnet, dass** der Transponder (2) in Rohr- oder Hohlzylinderform in die hohlförmige Mantelhülse (4) eingesteckt ist, wobei der Transponder (2) in der hohlförmigen Mantelhülse (4) rohrförmig gelagert ist und wobei sich eine erste Flachseite (9) des Transponders (2) an einer Innenfläche (13) der Mantelhülse (4) abstützt, und dass die rohrförmige Formgebung des Transponders (2) durch die Geometrie der Mantelhülse (4) aufrechterhalten wird.

2. Transponder-Baueinheit nach Anspruch 1, **dadurch gekennzeichnet, dass** die Mantelhülse (4) eine solche Quererstreckung aufweist, dass der Transponder (2) mit mindestens 80% Flächenanteil der ersten Flachseite (9) an der Innenfläche (13) der Mantelhülse (4) anliegt.

3. Transponder-Baueinheit nach Anspruch 1 oder 2, **dadurch gekennzeichnet, dass** ein zylinderförmiger Kernstab (3) aus einem elektrisch nicht leitenden Material vorgesehen ist, an dessen Umfangsfläche (10) der Transponder (2) mit einer zweiten Flachseite (11) anliegt.

4. Transponder-Baueinheit nach einem der Ansprüche 1 bis 3, **dadurch gekennzeichnet, dass** die Mantelhülse (4) im Querschnitt kreisförmig oder vieleckig oder viereckig ausgebildet ist.

5. Transponder-Baueinheit nach einem der Ansprüche 1 bis 4, **dadurch gekennzeichnet, dass** die Mantelhülse (4) aus einem elektrisch nicht leitenden Material, insbesondere aus Kunststoff oder aus Pappe, besteht.

6. Transponder-Baueinheit nach einem der Ansprüche 1 bis 5, **dadurch gekennzeichnet, dass** die Sekundärantenne (8) elektromagnetisch oder elektrisch mit der Primärantenne (7) gekoppelt.

7. Transponder-Baueinheit nach einem der Ansprüche 1 bis 6, **dadurch gekennzeichnet, dass** die Primärantenne (7) in den IC-Baustein (6) integriert ist.

8. Körper, der zur Identifizierung desselben mit einem Transponder verbunden ist, **dadurch gekennzeichnet, dass** der Körper ein Sackloch aufweist, in dem eine Transponder-Baueinheit (1) nach einem der Ansprüche 1 bis 7 formschlüssig und/oder kraftschlüssig und/oder stoffschlüssig gehaltert ist.

9. Körper nach Anspruch 8, **dadurch gekennzeichnet, dass** das Sackloch eine auf die Transponder-Baueinheit (1) abgestimmte Dicke und/oder Länge aufweist, so dass die Transponder-Baueinheit (1) mit Spiel oder unter Rastung in das Sackloch einschiebbar ist.

10. Körper nach Anspruch 8 oder 9, **dadurch gekennzeichnet, dass** das Sackloch mittels eines Stopfens verschließbar ist.

## Claims

1. A transponder assembly to be attached to a body, in particular to a product item, comprising a transponder (1) including a flexible substrate (5, 5', 5") to which an IC component (6) that has a data store and a primary antenna (7) connected electrically to the IC component (6) and a secondary antenna (8) are attached, and comprising a sheath element (4) that is in the form of a hollow sheath sleeve, **characterised in that** the transponder (2) in tubular or hollow cylindrical form is inserted into the hollow sheath sleeve (4), the transponder (2) being mounted in the form of a tube within the hollow sheath sleeve (4), and a first flat side (9) of the transponder (2) being supported on an inner surface (13) of the sheath sleeve (4), and that the tubular shaping of the transponder (2) is maintained by the geometry of the sheath sleeve (4).

2. The transponder assembly according to Claim 1, **characterised in that** the sheath sleeve (4) has a transverse extension such that the transponder (2) rests with at least 80% of the surface area of the first flat side (9) against the inner surface (13) of the sheath sleeve (4).

3. The transponder assembly according to Claim 1 or 2, **characterised in that** a cylindrical core bar (3) made of an electrically non-conductive material is provided, against the circumferential surface (10) of which the transponder (2) rests with a second flat side (11).

4. The transponder assembly according to any of Claims 1 to 3, **characterised in that** the sheath sleeve (4) is made with a circular or polygonal or square cross-section.

5. The transponder assembly according to any of Claims 1 to 4, **characterised in that** the sheath sleeve (4) is made of an electrically non-conductive material, in particular of plastic or cardboard.

6. The transponder assembly according to any of Claims 1 to 5, **characterised in that** the secondary antenna (8) is coupled electromagnetically or electrically to the primary antenna (7).

7. The transponder assembly according to any of Claims 1 to 6, **characterised in that** the primary antenna (7) is integrated into the IC component (6).

8. A body that is connected to a transponder in order to identify said body, **characterised in that** the body has a blind hole in which a transponder assembly (1) according to any of Claims 1 to 7 is held with positive locking and/or force locking and/or firm bonding.

9. The body according to Claim 8, **characterised in that** the blind hole has a thickness and/or length matched to the transponder assembly (1) so that the transponder assembly (1) can be pushed into the blind hole with play or locked in position.

10. The body according to Claim 8 or 9, **characterised in that** the blind hole can be closed by means of a stopper.

## Revendications

1. Unité modulaire de transpondeur en vue de l'application sur un corps, notamment sur un objet de produit, avec un transpondeur (1) contenant un substrat flexible (5, 5', 5"), sur lequel sont apposés un module de CI (6) présentant une mémoire de données et une antenne primaire (7) reliée électriquement avec le module de CI (6) ainsi qu'une antenne secondaire (8), et avec un élément à gaine (4), qui est formé comme un manchon sous gaine en forme creuse, **caractérisée en ce que** le transpondeur(2) en forme tubulaire ou cylindrique creuse est introduit dans le manchon sous gaine en forme creuse (4), le transpondeur (2) étant logé tubulairement dans le manchon sous gaine en forme creuse (4) et un premier côté plat (9) du transpondeur (2) s'appuyant sur une surface intérieure (13) du manchon sous gaine (4), et **en ce que** la conception tubulaire du transpondeur(2) est maintenue par la géométrie du manchon sous gaine (4).

2. Unité modulaire de transpondeur selon la revendication 1, **caractérisée en ce que** le manchon sous gaine (4) présente une telle extension transversale que le transpondeur (2) adhère avec au moins 80 % de répartition surfacique du premier côté plat (9) sur la surface intérieure (13) du manchon sous gaine (4).

3. Unité modulaire de transpondeur selon les revendications 1 ou 2, **caractérisée en ce qu'**une électrode à noyau en forme cylindrique (3) en une matière non conductible électriquement, sur la surface circonférentielle (10) de laquelle le transpondeur (2) adhère avec un second côté plat (11).

4. Unité modulaire de transpondeur selon une quelconque des revendications 1 à 3, **caractérisée en ce que** le manchon sous gaine (4) est conçu dans la section transversale en forme circulaire, polygonale ou tétragone.

5. Unité modulaire de transpondeur selon une quelconque des revendications 1 à 4, **caractérisée en ce que** le manchon sous gaine (4) consiste d'une matière non conductible électriquement, notamment en plastique ou en carton.

6. Unité modulaire de transpondeur selon une quelconque des revendications 1 à 5, **caractérisée en ce que** l'antenne secondaire (8) est couplée électromagnétiquement ou électriquement à l'antenne primaire (7).

7. Unité modulaire de transpondeur selon une quelconque des revendications 1 à 6, **caractérisée en ce que** l'antenne primaire (7) est intégrée dans le module de CI (6).

8. Corps, qui, en vue de l'identification de ce dernier, est connecté avec un transpondeur, **caractérisé en ce que** le corps présente un trou borgne, dans lequel une unité modulaire de transpondeur (1) selon une quelconque des revendications 1 à 7 est maintenue par complémentarité de formes et/ou par gravité et/ou par adhésion par matière.

9. Corps selon la revendication 8, **caractérisé en ce que** le trou borgne présente une épaisseur et/ou une longueur adaptée à l'unité modulaire de transpondeur (1), de sorte que l'unité modulaire de transpondeur (1) peut être insérée avec du jeu ou par encliquetage dans le trou borgne.

10. Corps selon les revendications 8 ou 9, **caractérisé en ce que** le trou borgne peut être fermé au moyen d'un bouchon.
